# EUROPEAN PATENT APPLICATION

(11) **EP 4 703 445 A1**
(43) Date of publication of application: **04.03.2026**
(21) Application number: 24196506.0
(22) Date of filing: 26.08.2024
(51) Int. Cl.: C09D 11/328, C09D 11/40, D06P 5/30

(54) **NEW INK SET FOR INK JET PRINTING ON TEXTILE**

(71) Applicant: Dover Europe Sàrl, 1214 Vernier (CH)
(72) Inventor: CASARTELLI, Alessia, 22038 Tavernerio (CO) (IT); UGOLETTI, Marco, 20128 Milano (IT); GUGGIARI, Luca, 22100 Como (IT)
(74) Representative: PGA S.p.A., Milano, Succursale di Lugano

(57) **Abstract**

The invention relates to an ink set, and to a printing method using such an ink set, said ink set comprising at least a cyan ink, a magenta ink, a yellow ink and a black ink comprising disperse and/or solvent dyes in an aqueous vehicle, wherein said disperse and/or solvent dyes are selected from the group consisting of Disperse Yellow 64, Disperse Yellow 114, Solvent Orange 11, Solvent Violet 36, Solvent Violet 14, Solvent Red 169, Solvent Red 195, Disperse Blue 60, Disperse Blue 165, and mixtures thereof.

## Description

### FIELD OF THE INVENTION

The invention relates to an ink set comprising at least a cyan ink, a magenta ink, a yellow ink and a black ink, wherein said ink set comprises disperse and/or solvent dyes selected from the group consisting of Disperse Yellow 64, Disperse Yellow 114, Solvent Orange 11, Solvent Violet 36, Solvent Violet 14, Solvent Red 169, Solvent Red 195, Disperse Blue 60, Disperse Blue 165, and mixtures thereof.

The use of said ink set in a method for inkjet-printing on fabric, preferably without pre- and post-treatment or washing is a further object of the invention.

### BACKGROUND ART

Inkjet-printing is a particular method of digital printing in which the pattern to be printed is created through appropriate graphic software and impressed directly on the substrate to be printed through an ink jet, which projects tiny droplets of ink onto said support. Ejection of the ink can be continuous or only when required (Drop On Demand, referred to as DOD). In turn, in the DOD system the ejection mechanism of the drops can be of two types: thermal or piezoelectric. In the first case, a resistor through which current pulses are passed is positioned at each nozzle; at each pulse, the resistor heats up to the temperature of a few hundred degrees in a few microseconds and generates a bubble of vapor in the ink in contact therewith. The expansion of the latter causes the ejection of the drop from the overlying nozzle. In the second case, a small channel surrounded by a piezoelectric crystal is placed under each nozzle; an electric pulse causes the crystal to deform and consequently the sudden narrowing of the channel and the ejection of the ink.

In recent years, digital inkjet-printing has become increasingly important as a fabric printing method as it has several advantages over conventional printing methods, such as silk screen printing. In fact, digital inkjet-printing eliminates the high costs related to the creation of the screen-printing tool which, for a small quantity of items, is uneconomical. Furthermore, digital inkjet-printing allows the use of a large number of colors and gradients thereof. Finally, faster inkjet printers are now available on the market and therefore suitable to be used industrially; these printers have ink heads having a large number of nozzles compatible with water-based inks. Digital inkjet printers suitable for the use of water-based inks are for example Artistri^{®} 2020 and 3210 Textile (E.I. du Pont de Nemours), Textile Jet (Mimaki), Display-Maker Fabrijet (MacDermid Color Span), Amber, Zircon, Amethyst and Pike (Stork), JP and Lario series (MS Printing Solutions), Rhotex and Kappa (Durst), Vutek (Efi), Renoir (Efi-Reggiani), Monnalisa (Robustelli) series.

Digital inkjet-printing can be used for printing textiles made of natural and synthetic fibers. Natural fibers include wool and cotton fibers. Synthetic fibers include polyester, polyamide, acrylic, and acetate. Polyester is one of the most used synthetic fibers in the textile industry; it can be used alone or with other natural or synthetic fibers, it can have variable thickness and can be processed to adapt to different conditions of use. Polyester can be used in blends with cotton, wool, nylon, polypropylene, Lycra, etc., to make virtually any piece of clothing, such as shirts, trousers, jackets, underwear, gloves, etc.

Different types of dyes and inks are used depending on the fabric and the desired effect. Such dyes and inks can comprise reactive dyes, suitable for cellulose-based fibers like cotton, acid dyes, mainly used for printing protein-based fibers like silk and wool, disperse dyes, mainly used for synthetic fibers like polyester, and pigment inks, used on a variety of fabrics but requiring binders to fix the inks.

Solvent dyes are generally not used for direct textile printing, but can find niche applications in specialized textile printing processes, such as print transfer and industrial coating.

Disperse dyes are widely used in textile printing, in particular in the printing of hydrophobic fibers such as polyester and cellulose acetates. Dispersed dye systems must have specific requirements to be used in digital inkjet-printing on fabrics, for example capacity to pass through the printer nozzles, stability during use and storage, color properties, such as for example intensity.

Furthermore, the fabrics printed with dispersed and solvent dye systems must have good washing, rubbing and perspiration fastness in order to maintain the color brightness over time. Perspiration fastness is most critical, and the textile industry is always involved to search improved techniques able to improve perspiration fastness.

The printing process usually requires a pre-treatment of the textile to be printed and a post-treatment of the printed textile. Pre-treatment and post-treatment are usually performed with pre- or post-treatment solutions comprising resins, binders and/or additives.

The pre-treatment aims to improve ink absorption, color vibrancy, and wash fastness. Pre-treatment is usually necessary to prevent ink bleeding and to ensure sufficient coloring. Effectiveness of the pre-treatment depends on its application as well as the additives or ingredients used. Pre-treatment may involve applying a chemical coating, comprising additives such as thickeners, alkali, irea, cationic agents, surfactants, softeners or binders to the fabric surface.

Post-treatment is usually necessary to improve the fixation and/or adhesion of inks on the fabric. The post-treatment can be distinguished in wet post-treatment and dry post-treatment. Wet post-treatment involves treatments with water or aqueous solution or steam and typically includes steaming, stripping, washing, and rinsing. Dry post-treatment involves treatments with heat and air, such as heat setting, curing, drying, and mechanical finishing, without involving water and/or steam.

Such pre- and post-treatments require energy consumption, additional time, and a huge amount of water, which must be subsequently disposed of without harming the environment.

It would be desirable to have a printing process without the need of pre-treatment and wet post-treatment, or at least to reduce the consumption of water, energy and time required by such treatments.

### SUMMARY OF THE INVENTION

The present inventors have found that an ink set comprising at least a cyan ink, a magenta ink, a yellow ink and a black ink, wherein said ink set comprising a specific selection of disperse and/or solvent dyes is able to get the above-mentioned desires.

In particular, the present inventors have found that using the selection of disperse and/or solvent dyes according to the invention it is possible to realize a printing process on textile avoiding or substantially reducing the need of pre-treatment and wet post-treatment, still maintaining good washing and rubbing fastness and improving perspiration fastness.

The inventors have found that the above results can be obtained with an ink set comprising at least a cyan ink, a magenta ink, a yellow ink and a black ink comprising disperse and/or solvent dyes selected from the group consisting of Disperse Yellow 64, Disperse Yellow 114, Solvent Orange 11, Solvent Violet 36, Solvent Violet 14, Solvent Red 169, Solvent Red 195, Disperse Blue 60, Disperse Blue 165, and mixtures thereof.

Therefore, a first object of the present invention is an ink set comprising at least a cyan ink, a magenta ink, a yellow ink and a black ink comprising disperse and/or solvent dyes in an aqueous vehicle, wherein said disperse and/or solvent dyes are selected from the group consisting of Disperse Yellow 64, Disperse Yellow 114, Solvent Orange 11, Solvent Violet 36, Solvent Violet 14, Solvent Red 169, Solvent Red 195, Disperse Blue 60, Disperse Blue 165, and mixtures thereof.

A preferred embodiment of the present invention is an ink set comprising:
- a cyan ink comprising disperse dyes in an aqueous vehicle, wherein said disperse dyes are selected from the group consisting of Disperse Blue 60, Disperse Blue 165, and mixture thereof,
- a magenta ink comprising solvent dyes in an aqueous vehicle, wherein said solvent dyes are selected from the group consisting of Solvent Red 169, Solvent Red 195, and mixture thereof,
- a yellow ink comprising disperse dyes in an aqueous vehicle, wherein said disperse dyes are selected from the group consisting of Disperse Yellow 64, Disperse Yellow 114, and mixture thereof, and
- a black ink comprising disperse and/or solvent dyes in an aqueous vehicle, wherein said disperse and/or solvent dyes are selected from the group consisting of Disperse Yellow 64, Disperse Yellow 114, Solvent Orange 11, Solvent Violet 36, Solvent Violet 14, Solvent Red 169, Solvent Red 195, Disperse Blue 60, Disperse Blue 165, and mixtures thereof.

A second object of the present invention is a method for inkjet-printing on a fabric using an ink set according to the first object of the invention.

Preferably, said method comprises the following steps:
(a) providing an inkjet printer responsive to digital signals,
(b) loading the printer with a fabric to be printed,
(c) loading the printer with an ink set according to the first object of the invention,
(d) printing the fabric by using said ink set in response to a digital signal, and
(e) fixing the inks printed on the fabric by heat at a temperature of from 160°C to 170°C for a period of from 3 to 8 minutes, and
(f) optionally, washing the printed fabric.

### DEFINITIONS

Disperse dyes are characterized by their insolubility in water, requiring dispersion in a medium to facilitate their application. In ink-jet printing, disperse dyes are finely ground and stabilized in a liquid carrier to ensure uniform distribution and consistent color application. The primary advantage of disperse dyes lies in their excellent sublimation properties, allowing them to vaporize and penetrate synthetic fibers at high temperatures. This results in vibrant, durable prints with superior wash fastness and resistance to fading.

Solvent dyes are soluble in organic solvents. These dyes are known for their high solubility, intense coloration, and excellent lightfastness, making them suitable for applications where durability and resistance to environmental factors are essential. Solvent dyes are dissolved in organic solvents to create a stable ink formulation that can be precisely deposited onto the substrate. The use of solvent dyes in textile printing is particularly advantageous for printing on synthetic fibers such as polyester and nylon, where their high affinity for these materials ensures deep, even coloration and excellent fastness properties.

The disperse and solvent dyes of the present invention are identified by the designation "C.I.", established by Society Dyers and Colourists, Dradford, Yorkshire, UK, published in Color Index, 3rd edition, 1971.

By "aqueous vehicle" according to the present invention it is meant a solution, suspension or emulsion in which the dyes are dispersed or dissolved. The aqueous vehicle consists of an aqueous solvent and any ink additives, when present, and therefore consists in all components of the ink other than dyes.

By "aqueous solvent" according to the present invention it is meant water or a mixture of water and organic solvents miscible in water.

By "additives" or "ink additives" according to the present invention it is meant all the components of an ink other than the dyes and the aqueous vehicle or solvent.

"Perspiration fastness" according to the present invention refers to the ability not to fade and not to stain when the printed fabric is perspired. This characteristic is evaluated by referring to the method described in the international standard UNI EN ISO 105-E04:1998.

"Rubbing fastness" according to the present invention refers to the ability not to fade and not to stain when printed fabric is rubbed with a standard white cloth. This characteristic is evaluated by referring to the method described in the international standard UNI EN ISO 105-X12:2016.

### DETAILED DESCRIPTION OF THE INVENTION

The first object of the present invention is an ink set comprising at least a cyan ink, a magenta ink, a yellow ink and a black ink comprising disperse and/or solvent dyes in an aqueous vehicle, wherein said disperse and/or solvent dyes are selected from the group consisting of Disperse Yellow 64, Disperse Yellow 114, Solvent Orange 11, Solvent Violet 36, Solvent Violet 14, Solvent Red 169, Solvent Red 195, Disperse Blue 60, Disperse Blue 165, and mixtures thereof.

The inventors have found that the ink set according to the first object of the present invention advantageously has good washing, rubbing and perspiration fastness.

Preferably, the inks of the ink set according to the first object of the invention comprises:
- from 80 to 99%, preferably from 90 to 98%, more preferably 93-97% by weight of aqueous vehicle and from 1 to 20%, preferably from 2 to 10%, more preferably from 3 to 7% by weight of said disperse and/or solvent dyes, based on the total weight of the ink.

According to the first object of the present invention, the cyan ink comprises disperse dyes in an aqueous vehicle, wherein said disperse dyes are selected from the group consisting of Disperse Blue 60, Disperse Blue 165, and mixtures thereof. According to the first object of the present invention, the magenta ink comprises solvent dyes in an aqueous vehicle, wherein said solvent dyes are selected from the group consisting of Solvent Red 169, Solvent Red 195, and mixtures thereof.

According to the first object of the present invention, the yellow ink comprises disperse dyes in an aqueous vehicle, wherein said disperse dyes are selected from the group consisting of Disperse Yellow 64, Disperse Yellow 114, and mixtures thereof.

According to the first object of the present invention, the black ink comprises disperse and/or solvent dyes in an aqueous vehicle, wherein said disperse and/or solvent dyes are selected from the group consisting of Disperse Yellow 64, Disperse Yellow 114, Solvent Orange 11, Solvent Violet 36, Solvent Violet 14, Solvent Red 169, Solvent Red 195, Disperse Blue 60, Disperse Blue 165, and mixtures thereof. In a preferred embodiment of the first object of the invention, the ink set comprises one or more additional inks selected from red, violet, orange and blue inks, each comprising at least one disperse and/or solvent dye in an aqueous vehicle, wherein said disperse and/or solvent dyes are selected from the group consisting of Disperse Yellow 64, Disperse Yellow 114, Solvent Orange 11, Solvent Violet 36, Solvent Violet 14, Solvent Red 169, Solvent Red 195, Disperse Blue 60, Disperse Blue 165, and mixtures thereof.

According to the first object of the present invention, the red ink comprises solvent dyes in an aqueous vehicle, wherein said solvent dyes are selected from the group consisting of Solvent Red 169, Solvent Red 195, and mixtures thereof.

According to the first object of the present invention, the violet ink comprises solvent dyes in an aqueous vehicle, wherein said solvent dyes are selected from the group consisting of Solvent Violet 36, Solvent Violet 14, and mixtures thereof.

According to the first object of the present invention, the orange ink comprises disperse and/or solvent dyes in an aqueous vehicle, wherein said disperse and/or solvent dyes are selected from the group consisting of Disperse Yellow 64, Disperse Yellow 114, Solvent Orange 11, Solvent Red 169, Solvent Red 195, and mixtures thereof.

According to the first object of the present invention, the blue ink comprises disperse dyes in an aqueous vehicle, wherein said disperse dyes are selected from the group consisting of Disperse Blue 60, Disperse Blue 165, and mixtures thereof.

According to the first object of the present invention, the at least one colored ink can be in the "light" version, containing a lower concentration of dyes. Such ink are usually named "light magenta", "light yellow", "light blue", and so on, but the light version of black ink which is named "grey" ink.

According to the first object of the invention, preferably the aqueous vehicle contains water as aqueous solvent, optionally mixed with one or more organic solvents.

Preferably, the inks of the ink set according to the invention comprises from 30 to 90%, preferably from 40 to 85%, more preferably from 50 to 80% by weight of water, based on the total weight of the ink.

The type of organic solvent used in the aqueous vehicle of the inks of the ink set according to the first object of the invention and the amount thereof depend on the type of application, and on the desired surface tension, viscosity and vapour pressure of the ink, on its solubility in water, on the dye used and on the compatibility with the materials constituting the printing apparatus as well as on the substrate on which the ink is to be printed.

Examples of water-miscible organic solvents, usable in the aqueous vehicle of the inks of the ink set of the first object of the invention include alcohols, ketones, ketoalcohols, ethers and others, such as thiodiglycol, sulfolane, 2-pyrrolidone, 1,3-dimethyl-2-imidazolidinone, urea and caprolactam; glycols such as ethylene glycol, diethylene glycol, triethylene glycol, tetraethylene glycol, propylene glycol, dipropylene glycol, tripropylene glycol, trimethylene glycol, butylene glycol and hexylene glycol; addition polymers of oxyethylene or oxypropylene, such as polyethylene glycol, polypropylene glycol and the like; triols such as glycerol and 1,2,6-hexanotriol; lower alkyl ethers of polyhydric alcohols, such as ethylene glycol monomethyl ether, ethylene glycol monoethyl ether, diethylene glycol monomethyl ether, diethylene glycol monoethyl ether; lower dialkyl ethers of polyhydric alcohols, such as diethylene glycol dimethyl or diethyl ether. According to a preferred embodiment of the present invention, urea, glycerol, and diethylene glycol are used, alone or in combination.

The organic solvent is present in the aqueous vehicle of the inks of the ink set according to the first object of the invention in an amount of from 5 to 70%, preferably from 10 to 50%, more preferably from 15 to 40%, still more preferably from the 20 to 35%, based on the total weight of the aqueous vehicle.

According to the first object of the invention, the aqueous vehicle further comprises polymeric binders and crosslinking agents to improve color strength and fastness of inks on textiles. Polymeric binders include one or more of polyurethanes, polyesters, polyvinyl alcohol, polyvinyl pyrrolidone (PVP), styrene-acrylic copolymer, and acrylic polymers, preferably polyurethanes, polyesters, and acrylic polymers. Crosslinking agents include one or more of blocked isocyanates, oxazolines, and carbodiimides. Examples of polymeric binders usable in the aqueous vehicle of the inks of the ink set of the first object of the invention include polyurethane resins like those commercially available under the trademarks IMPRANIL DLC-T by Covestro, DAOTAN TW 6425/40WA by Allnex, TEGO VARIPLUS DS 50 by Evonik, NEBOPLAST PEU 3500 by Safic-Alcan, and ESAJET 200 by Lamberti, acrylic resins like those commercially available under the trademarks NEBOPLAST MB 6537 by Safic-Alcan, CRILAT 4815 and CRILAT 1815 by Vinavil, NEOCRIL XK15 by Covestro, and sulfopolyesters like those commercially available under the trademarks EASTECK 1200 and EASTEK 1400 by Eastman. According to a preferred embodiment of the present invention, TEGO VARIPLUS DS 50 binder is used, alone or in combination with other polyurethane binders.

Examples of crosslinking agents usable in the aqueous vehicle of the inks of the ink set of the first object of the invention include aliphatic blocked polyisocyanates like those commercially available under the trademarks IMPRAFIX 2794 by Covestro and TANALINK PCI by Tanatex Chemicals, acrylic oxazolines like those commercially available under the trademarks EPOCROSS WS 700 by Shokubai, and polycarbodiimides like those commercially available under the trademarks CARBODILITE E-05 by Nisshimbo Chemical.

Preferably, the inks of the ink set according to the invention comprises from 2 to 30%, preferably from 4 to 20%, more preferably from 8 to 15% by weight of polymeric binder(s), based on the total weight of the ink. Preferably, the inks of the ink set according to the invention comprises from 1 to 10%, preferably from 2 to 8%, more preferably from 3 to 6% by weight of crosslinking agent(s), based on the total weight of the ink.

According to the first object of the invention, the aqueous vehicle further comprises additives typically used in inks for ink-jet printers, insofar as they do not interfere with the stability and the capacity of the final ink to be ejected.

In particular, in the aqueous vehicle according to the first object of the invention, the additives, when present, are less than 25% by weight, based on the total weight of the ink.

Such additives, well known to the man skilled in the art and commonly used in the field, include surfactants to adjust surface tension and wettability; dispersing polymers to improve stability; biocides to inhibit the growth of microorganisms; pH regulators; sequestering agents (i.e. chelating agents) to eliminate the effects of any metal ions present as impurities.

Surfactants suitable as additives are for example ethoxylated alcohols and diols, such as the Surfynols^{®} and Zetasperse^{®} series by Air Products, especially Surfynol^{®} 465, 104E, 440 and PSA336, and Zetasperse^{®} 1600 and 2300, sulfosuccinates such as the Aerosol^{®} series by Cytec, the BYK^{®} series by Byk, and the Sabosol^{®} series by Sabo Chemicals, especially Byk^{®} 3400 and Sabosol^{®} DOS70, organosilicones such as the Silwet^{®} series of GE Silicons, and fluorinated surfactants such as the Zonyl^{®} series by DuPont, DX4005N by Dynax Corporation, and Hexafor^{®} 641 by Maflon. According to a preferred embodiment of the present invention, Sabosol^{®} DOS70 and Byk^{®} 3400 surfactants are used, alone or in combination.

In particular, in the inks of the ink set according to the first object of the invention, the surfactants, if present, are used in amounts ranging from 0.01 to 10% by weight, preferably from 0.2 to 8% by weight, still more preferably between 0.2 and 5% by weight, based on the total weight of the ink.

The ink drop rate, the length of the drop ligament, the size and stability of the drop flow are strongly influenced by the surface tension and viscosity of the ink.

Therefore, preferably, the inks of the ink set according to the first object of the invention has a surface tension comprised between 20 and 40 mN/m, more preferably comprised between 25 and 35 mN/m at 25°C and/or a viscosity comprised between 3 and 9 mPa*s, more preferably comprised between 4 and 8 mPa*s at 25°C.

Dispersing polymers suitable as additives are, for example, polymers soluble or dispersible in the aqueous vehicle, and may be ionic or non-ionic. Suitable classes of polymers may be acrylic, styrene-acrylic polymers and polyurethanes. Commercial polymers that fall within the above chemical classes and are suitable for use in the inks of the ink set of the present invention are for example the copolymers DISPERBYK^{®} 190, 2010, and 2015 marketed by BYK-Chemie GmbH, the polymer CLIQSPERSE^{®}130 marketed by CIiQ Swiss Tech AG, the polymer Zetasperse^{®} 3100 marketed by Evonik, and the Joncryl^{®} series marketed by BASF SE. According to a preferred embodiment of the present invention, CLIQSPERSE^{®}130 polymer, DISPERBYK^{®} 2015 polymer, and Zetasperse^{®} 3100 polymer are used, alone or in combination.

In particular, in the inks of the ink set according to the first object of the invention, the dispersing polymers, if present, are used in amounts of less than 15% by weight based on the total weight of the ink, preferably in an amount ranging from 1 to 10%, more preferably from 1 to 6% by weight, based on the total weight of the ink.

Biocides suitable as additives include for example Proxel^{®} GXL (marketed by Lonza LTD) and the Acticide^{®} biocide series, such as Acticide^{®} MBS, MBS2550, BFM, OF25, MV, CS, AND BCL2 marketed by Thor. According to a preferred embodiment of the present invention, Acticide^{®} MBS biocide is used, alone or in combination with other biocides.

pH regulators suitable as additives include, for example, tris(hydroxymethyl)-aminomethane ("Trizma" or "Tris"), TEA (triethanolamine) and 2-amino-2-methylpropan-1-ol (AMP95, marketed by Dow Chemical Company).

Sequestering agents suitable as additives include ethylenediaminetetraacetic acid (EDTA), imminodiacetic acid (IDA), ethylenediamine-di(o-hydroxyphenylacetic acid) (EDDHA), nitrilotriacetic acid (NTA), dihydroxyethylglycine (DHEG), trans-1,2-cyclohexanodiaminatetraacetic acid (CyDTA), ethylenetriamine-N,N,N',N",N"-pentaacetic acid (DTPA), glycoletherdiamine-N,N,N',N'-tetraacetic acid (GEDTA), and salts thereof. According to a preferred embodiment of the present invention, EDTA and DTPA are used, alone or in combination.

The second object of the present invention is a method for inkjet-printing on a fabric using an ink set according to the first object of the invention.

Preferably, said method comprises the following steps:
(a) providing an inkjet printer responsive to digital signals,
(b) loading the printer with a fabric to be printed,
(c) loading the printer with an ink set according to the first object of the invention,
(d) printing the fabric by using said ink set in response to a digital signal, and
(e) fixing the inks printed on the fabric by heat at a temperature of from 160°C to 170°C for a period of from 3 to 8 minutes, and
(f) optionally, washing the printed fabric.

The inventors have found that the method for inkjet-printing on a fabric according to the second object of the invention has the advantage over standard dispersed printing process in that post-treatment steaming and stripping steps usually necessary to ensure good fixation of the inks on the fabric can be avoided. The method according to the second object of the present invention therefore is simplified as compared to standard inkjet-printing on fabric process and advantageously reduces the consumption of water, energy and time required while still maintaining good washing, perspiration and rubbing fastness.

According to the second object of the invention, the fabric is made of polyester, polyamide, acrylic, acetate, and/or blend thereof with natural fibers, such as wool and cotton. Before printing, the fabric is optionally pre-treated by applying pre-treatment solutions known to those skilled, e.g. by dipping or spraying. However, the inventors have found that by using the ink set according to the first object of the invention pre-treatment before printing can be avoided.

According to the second object of the invention, printing is preferably carried out by means of an inkjet printer with DOD technology, for example a printer selected from Artistri ^{®} 2020 and 3210 Textile (E.I. du Pont de Nemours), Textile Jet (Mimaki), Display-Maker Fabrijet (MacDermid Color Span), Amber, Zircon, Amethyst and Pike (Stork), JP and Lario series (MS Printing Solutions), Rhotex (Durst), Vutek (Efi), Renoir (Efi-Reggiani), Monnalisa (Robustelli).

The amount of inks applied to the fabric depends on the printer model and its resolution, and on the amount of inks needed to achieve a certain color. Based on these considerations, the amount in grams of inks printed per unit of area of the fabric for a given color is determined. In an embodiment according to the second object of the invention, 0.5 to 20 grams of inks per m² of fabric are applied.

The fabric printed according to the second objects of the invention is fixed by heat at a temperature of from 160°C to 170°C, preferably at about 166°-168°C for a period of from 3 to 8 minutes, preferably from 4 to 7 minutes. The inventors have found that the using the method according to the second object of the present invention advantageously reduces the consumption of water, energy and time required while still maintaining good washing, perspiration and rubbing fastness as the fixing the inks printed on the fabric in step (e) can be performed without steam; the steaming step usually performed after direct printing step in standard dispersed printing process can advantageously be avoided, thereby reducing consumption of water, energy and time required.

In an embodiment of the second invention, the fabric to be printed is not pre-treated with pre-treatment solutions.

In an embodiment of the second invention, the printed fabric is not post-treated with wet post-treatment including steam and/or post-treatment solutions.

After fixation, the printed fabric is optionally washed in cold water, ranging from 15°C to 30°C, preferably from 20°C to 25°C, for 10-15 minutes. According to an embodiment of the second invention, the amount of water employed in the washing step can be strongly reduced compared to the amount of water usually employed in the washing step of standard treatment, usually ranging from 15 to 20 liters per square meter of printed fabric. According to an embodiment of the second invention, the amount of water employed in the washing step can be reduced to 5 liters per square meter of printed fabric or less, preferably to 3 liters per square meter of printed fabric, or even less. Advantageously, the inventors have found that by using the ink set according to the first object of the invention washing after fixing can also be avoided.

In one particular embodiment of the second invention, the fabric to be printed is not pre-treated with pre-treatment solutions and the printed fabric is not post-treated with wet post-treatment including water and/or steam and/or post-treatment solutions.

### EXPERIMENTAL PART

### Example 1 - Perspiration fastness

An aqueous dispersion comprising 2% by weight of the dye under evaluation was prepared and applied on a 7058FL DecoTex standard polyester textile (260x320 cm, 210 g/m²) by a spiral bar coater (spiral gap 10 µm). After that, fixation in oven at 170°C for 3 minutes was performed.

The printed fabrics were evaluated for the results of perspiration fastness, acid at pH 5.5 and basic at pH 8 with different fiber witness (wool, acrylic, polyester, polyamide, cotton and acetate). The evaluation of perspiration fastness was made according to standard UNI EN ISO 105-E04:1998, with a score ranging from 0 (the worst) to 5 (the best). The test apparatus consisted of a stainless-steel plate on which a weight of approximately 5 kg is firmly supported and with a base capable of exerting a pressure of 12.5 kPa on the test piece, placed between two thin sheets of glass or resin. The tested inks passed the test when the average score with different fiber witness was higher than 4.5, with no score lower than 4.

All dyes passing the perspiration fastness test were further considered for additional characteristics (sublimation energy, shade, milling and hazard classification) before final selection.

The results are summarized in the following Table 1.

**TABLE 1**

| COLOUR INDEX | TEST PASSED | SELECTED |
|---|---|---|
| SOLVENT YELLOW 16 | YES | NO (1) |
| SOLVENT YELLOW 18 | YES | NO (2) |
| DISPERSE YELLOW 23 | YES | NO (1) |
| DISPERSE YELLOW 119 | YES | NO (1) |
| DISPERSE YELLOW 42 | YES | NO (2) |
| SOLVENT YELLOW 160 | NO | - |
| SOLVENT YELLOW 163 | NO | - |
| SOLVENT YELLOW 184 | YES | NO (1) |
| DISPERSE YELLOW 201 | NO | - |
| DISPERSE YELLOW 211 | YES | NO (1) |
| SOLVENT YELLOW 43 | NO | - |
| SOLVENT YELLOW 56 | NO | - |
| DISPERSE YELLOW 64 | YES | YES |
| DISPERSE YELLOW 71 | YES | NO (2) |
| DISPERSE YELLOW 79 | NO | - |
| SOLVENT YELLOW 98 | YES | NO (3) |
| SOLVENT YELLOW 141 | NO | - |
| SOLVENT YELLOW 241 | NO | - |
| SOLVENT GREEN 5 | YES | NO (1) |
| DISPERSE YELLOW 39 | NO | - |
| DISPERSE YELLOW 114 | YES | YES |
| DISPERSE ORANGE 31 | NO | - |
| DISPERSE ORANGE 44 | NO | - |
| DISPERSE ORANGE 47 | NO | - |
| SOLVENT ORANGE 60 | YES | NO (1) |
| DISPERSE ORANGE 80 | NO | - |
| DISPERSE ORANGE 54 | NO | - |
| DISPERSE ORANGE 29 | NO | - |
| SOLVENT ORANGE 11 | YES | YES |
| DISPERSE ORANGE 47 | NO | - |
| DISPERSE VIOLET 28 | YES | NO (1) |
| SOLVENT VIOLET 31 | YES | NO (1) |
| DISPERSE VIOLET 26 | NO | - |
| SOLVENT VIOLET 36 | YES | YES |
| SOLVENT VIOLET 14 | YES | YES |
| DISPERSE RED 82 | NO | - |
| DISPERSE RED 177 | NO | - |
| DISPERSE RED 92 | NO | - |
| SOLVENT RED 135 | YES | NO (2) |
| SOLVENT RED 218 | NO | - |
| DISPERSE RED 74 | NO | - |
| SOLVENT RED 52 | YES | NO (2) |
| DISPERSE VIOLET 57 | YES | NO (4) |
| SOLVENT RED 196 | NO | - |
| SOLVENT RED 197 | NO | - |
| SOLVENT RED 169 | YES | YES |
| DISPERSE RED 91 | YES | NO (2) |
| DISPERSE BLUE 79:1 | NO | - |
| SOLVENT YELLOW 44 | NO | - |
| SOLVENT YELLOW 145 | NO | - |
| SOLVENT YELLOW 172 | NO | |
| DISPERSE BLUE 60 | YES | YES |
| SOLVENT RED 195 | YES | YES |
| DISPERSE BLUE 165 | YES | YES |

| | | |
|---|---|---|
| (1) These dyes were not selected because they were found to be low energy sublimatic dyes causing fixing problems and color shading on printed textile. (2) These dyes were not selected because not having a suitable color shade. (3) These dyes were not selected because difficult to mill for reducing particle size suitable for ink-jet printing. (4) These dyes were not selected because classified as hazardous substance subject to ADR (Accord Dangereux Routier). | | |

The results summarized in Table 1 demonstrated that only Disperse Yellow 64, Disperse Yellow 114, Solvent Orange 11, Solvent Violet 36, Solvent Violet 14, Solvent Red 169, Disperse Blue 60, Solvent Red 195, and Disperse Blue 165 satisfied all the required characteristics.

### EXAMPLE 2 -

An ink set was prepared as summarized in the following Table 2. The dye amount is expressed in % by weight with respect to the weight of the final ink.

**TABLE 2**

| **INK** | DYE | DYE AMOUNT |
|---|---|---|
| **P294** - **CYAN** | DISPERSE BLUE 60 | 5.30 |
| **P292 - MAGENTA** | SOLVENT RED 195 | 5.00 |
| **P289 - YELLOW** | DISPERSE YELLOW 64 | 4.50 |
| **P293 - BLACK** | DISPERSE YELLOW 64 | 1.50 |
| | SOLVENT RED 195 | 2.40 |
| | DISPERSE BLUE 60 | 0.60 |
| | DISPERSE BLUE 165 | 2.70 |
| **P342 - VIOLET SV** | SOLVENT VIOLET 36 | 6.00 |
| **P369 - LIGHT MAGENTA** | SOLVENT RED 195 | 0.60 |
| **P371 - LIGHT BLUE** | DISPERSE BLUE 165 | 0.60 |
| **P315 - GREY** | DISPERSE YELLOW 64 | 0.17 |
| | SOLVENT RED 195 | 0.13 |
| | DISPERSE BLUE 60 | 0.21 |
| | DISPERSE BLUE 165 | 0.06 |

The final inks comprised the dyes dispersed in an aqueous solution comprising about 20-30% of glycol, 0.2-5% of surfactant agent, about 10% of binder, about 0.5% and about 5-6% of dispersant agent, all percentage being by weight with respect to the weight of the final ink.

The ink set was used to print three different fabrics, namely Tanzine fabric (crepon), Bubble fabric (polyester) and IDA PS fabric (satin) without pre-treatment. Printing was made with JP7 MS printer using printing mode B or C2HQ in four steps and fixing at 160°C or 167°C for 6 minutes. No wet post-treatment or washing was applied.

The results of perspiration and rubbing fastness are summarized in the following tables 3-5. The evaluation of perspiration fastness was made according to standard UNI EN ISO 105-E04:1998, as explained in example 1. The evaluation of rubbing fastness was made according to standard UNI EN ISO 105-X12:2016. The rubbing fastness evaluation was made by observing the color that is transferred (or not) on the cotton witness in comparison with the standard grey scale. Standard grey scale can be used for assessing color change and staining during color fastness testing. The color change scale consists of nine pairs of grey colored chips, from grades 1 to 5 (with four half steps). Grade 5 represents no change and grade 1 depicts severe change.

**TABLE 3**

| PRINT ON TANZINE FABRIC | | | | |
|---|---|---|---|---|
| **FIX: 160°C x 7 min - PRINTING MOD: B 4 steps** | | | | |
| | PERSPIRATION FASTNESS | | RUBBING FASTNESS | |
| MULTI FIBER WITNESS | ACID | BASIC | WET | DRY |
| WOOL | 5 | 4/5 | 4/5 | 4/5 |
| VISCOSE | 5 | 4/5 | | |
| SILK | 4 | 4 | | |
| ACRYLIC | 5 | 4/5 | | |
| POLYESTER | 4/5 | 4 | | |
| POLYAMIDE | 4 | 3/4 | | |
| COTTON | 4/5 | 4 | | |
| ACETATE | 4/5 | 4 | | |

| **FIX: 167°C × 7 min - PRINTING MOD: B 4 steps** | | | | |
|---|---|---|---|---|
| | PERSPIRATION FASTNESS | | RUBBING FASTNESS | |
| MULTI FIBER WITNESS | ACID | BASIC | WET | DRY |
| WOOL | 5 | 5 | 5 | 5 |
| VISCOSE | 5 | 5 | | |
| SILK | 4/5 | 4/5 | | |
| ACRYLIC | 5 | 5 | | |
| POLYESTER | 5 | 5 | | |
| POLYAMIDE | 4/5 | 4/5 | | |
| COTTON | 5 | 5 | | |
| ACETATE | 5 | 5 | | |

| **FIX: 167°C × 7 min - PRINTING MOD: C2HQ 4 steps** | | | | |
|---|---|---|---|---|
| | PERSPIRATION FASTNESS | | RUBBING FASTNESS | |
| MULTI FIBER WITNESS | ACID | BASIC | WET | DRY |
| WOOL | 5 | 4/5 | 4/5 | 4/5 |
| VISCOSE | 5 | 4/5 | | |
| SILK | 4 | 4 | | |
| ACRYLIC | 5 | 4/5 | | |
| POLYESTER | 4/5 | 4 | | |
| POLYAMIDE | 4 | 3/4 | | |
| COTTON | 4/5 | 4 | | |
| ACETATE | 4/5 | 4 | | |

**TABLE 4**

| PRINT ON BUBBLE FABRIC | | | | |
|---|---|---|---|---|
| **FIX: 160°C × 7 min - PRINTING MOD: B 4 steps** | | | | |
| | PERSPIRATION FASTNESS | | RUBBING FASTNESS | |
| MULTI FIBER WITNESS | ACID | BASIC | WET | DRY |
| WOOL | 5 | 5 | 4 | 4 |
| VISCOSE | 5 | 4/5 | | |
| SILK | 4/5 | 3/4 | | |
| ACRYLIC | 5 | 4/5 | | |
| POLYESTER | 4/5 | 4/5 | | |
| POLYAMIDE | 4 | 3 | | |
| COTTON | 4/5 | 4 | | |
| ACETATE | 4/5 | 4 | | |

| **FIX: 167°C × 7 min - PRINTING MOD: B 4 steps** | | | | |
|---|---|---|---|---|
| | PERSPIRATION FASTNESS | | RUBBING FASTNESS | |
| MULTI FIBER WITNESS | ACID | BASIC | WET | DRY |
| WOOL | 5 | 5 | 5 | 5 |
| VISCOSE | 5 | 5 | | |
| SILK | 5 | 4 | | |
| ACRYLIC | 5 | 5 | | |
| POLYESTER | 5 | 5 | | |
| POLYAMIDE | 4/5 | 3/4 | | |
| COTTON | 5 | 4 | | |
| ACETATE | 5 | 4 | | |

| **FIX: 167°C × 7 min - PRINTING MOD: C2HQ 4 steps** | | | | |
|---|---|---|---|---|
| | PERSPIRATION FASTNESS | | RUBBING FASTNESS | |
| MULTI FIBER WITNESS | ACID | BASIC | WET | DRY |
| WOOL | 5 | 5 | 4 | 4 |
| VISCOSE | 5 | 4/5 | | |
| SILK | 4/5 | 3/4 | | |
| ACRYLIC | 5 | 4/5 | | |
| POLYESTER | 4/5 | 4/5 | | |
| POLYAMIDE | 4 | 3 | | |
| COTTON | 4/5 | 4 | | |
| ACETATE | 4/5 | 4 | | |

**TABLE 5**

| PRINT ON IDA PS FABRIC | | | | |
|---|---|---|---|---|
| **FIX: 160°C × 7 min - PRINTING MOD: B 4 steps** | | | | |
| | PERSPIRATION FASTNESS | | RUBBING FASTNESS | |
| MULTI FIBER WITNESS | ACID | BASIC | WET | DRY |
| WOOL | 5 | 5 | 4/5 | 5 |
| VISCOSE | 5 | 4/5 | | |
| SILK | 4/5 | 4 | | |
| ACRYLIC | 5 | 4/5 | | |
| POLYESTER | 4/5 | 4/5 | | |
| POLYAMIDE | 3/4 | 3/4 | | |
| COTTON | 4/5 | 4 | | |
| ACETATE | 4/5 | 4/5 | | |

| **FIX: 167°C × 7 min - PRINTING MOD: B 4 steps** | | | | |
|---|---|---|---|---|
| | PERSPIRATION FASTNESS | | RUBBING FASTNESS | |
| MULTI FIBER WITNESS | ACID | BASIC | WET | DRY |
| WOOL | 5 | 5 | 5 | 5 |
| VISCOSE | 5 | 5 | | |
| SILK | 5 | 4/5 | | |
| ACRYLIC | 5 | 5 | | |
| POLYESTER | 5 | 5 | | |
| POLYAMIDE | 4/5 | 4 | | |
| COTTON | 5 | 4/5 | | |
| ACETATE | 5 | 5 | | |

| **FIX: 167°C × 7 min - PRINTING MOD: C2HQ 4 steps** | | | | |
|---|---|---|---|---|
| | PERSPIRATION FASTNESS | | RUBBING FASTNESS | |
| MULTI FIBER WITNESS | ACID | BASIC | WET | DRY |
| WOOL | 5 | 5 | 4/5 | 5 |
| VISCOSE | 5 | 4/5 | | |
| SILK | 4/5 | 4 | | |
| ACRYLIC | 5 | 4/5 | | |
| POLYESTER | 4/5 | 4/5 | | |
| POLYAMIDE | 3/4 | 3/4 | | |
| COTTON | 4/5 | 4 | | |
| ACETATE | 4/5 | 4/5 | | |

The results of perspiration and rubbing fastness were good in all conditions.

The increase of fixation temperature from 160°C to 167°C allowed a more complete color development with more saturated and bright color and at the same time better results of perspiration and rubbing fastness.

### EXAMPLE 3

The same ink set of example 2 was used to print three different fabrics, namely Tanzine fabric (crepon), Bubble fabric (polyester) and IDA PS fabric (satin) with or without pre-treatment. The pretreatment solution comprised a proprietary copolymer mixture (JET S by Lamberti) diluted at 3% in water.

Printing was made with JP7 printer using printing mode B in four steps and fixing at 167°C for 7 minutes or 165°C for 3 minutes. No wet post-treatment or washing was applied.

The results of perspiration and rubbing fastness are summarized in the following tables 6-8. The evaluation of perspiration fastness was made according to standard UNI EN ISO 105-E04:1998, as explained in example 1. The evaluation of rubbing fastness was made according to standard UNI EN ISO 105-X12:2016, as explained in example 2.

**TABLE 6**

| PRINT ON BUBBLE FABRIC | | | | |
|---|---|---|---|---|
| **FIX: 167°C × 7 min - PRINTING MOD: B 4 steps - Pretreatment** | | | | |
| | PERSPIRATION FASTNESS | | RUBBING FASTNESS | |
| MULTI FIBER WITNESS | ACID | BASIC | WET | DRY |
| WOOL | 5 | 5 | 4/5 | 5 |
| ACRYLIC | 5 | 5 | | |
| POLYESTER | 5 | 5 | | |
| POLYAMIDE | 5 | 4/5 | | |
| COTTON | 5 | 4/5 | | |
| ACETATE | 5 | 5 | | |

| **FIX: 165°C × 3 min - PRINTING MOD: B 4 steps - No Pretreatment** | | | | |
|---|---|---|---|---|
| | PERSPIRATION FASTNESS | | RUBBING FASTNESS | |
| MULTI FIBER WITNESS | ACID | BASIC | WET | DRY |
| WOOL | 5 | 5 | 5 | 5 |
| ACRYLIC | 5 | 5 | | |
| POLYESTER | 5 | 5 | | |
| POLYAMIDE | 5 | 5 | | |
| COTTON | 5 | 5 | | |
| ACETATE | 5 | 5 | | |

**TABLE 7**

| PRINT ON TANZINE FABRIC | | | | |
|---|---|---|---|---|
| **FIX: 167°C × 7 min - PRINTING MOD: B 4 steps - Pretreatment** | | | | |
| | PERSPIRATION FASTNESS | | RUBBING FASTNESS | |
| MULTI FIBER WITNESS | ACID | BASIC | WET | DRY |
| WOOL | 5 | 5 | 4/5 | 5 |
| ACRYLIC | 5 | 5 | | |
| POLYESTER | 5 | 5 | | |
| POLYAMIDE | 5 | 4/5 | | |
| COTTON | 5 | 4/5 | | |
| ACETATE | 5 | 5 | | |

| **FIX: 165°C × 3 min - PRINTING MOD: B 4 steps - No Pretreatment** | | | | |
|---|---|---|---|---|
| | PERSPIRATION FASTNESS | | RUBBING FASTNESS | |
| MULTI FIBER WITNESS | ACID | BASIC | WET | DRY |
| WOOL | 5 | 5 | 5 | 5 |
| ACRYLIC | 5 | 5 | | |
| POLYESTER | 5 | 5 | | |
| POLYAMIDE | 5 | 5 | | |
| COTTON | 5 | 5 | | |
| ACETATE | 5 | 5 | | |

**TABLE 8**

| PRINT ON IDA PS FABRIC | | | | |
|---|---|---|---|---|
| **FIX: 167°C × 7 min - PRINTING MOD: B 4 steps - Pretreatment** | | | | |
| | PERSPIRATION FASTNESS | | RUBBING FASTNESS | |
| MULTI FIBER WITNESS | ACID | BASIC | WET | DRY |
| WOOL | 5 | 5 | 4/5 | 5 |
| ACRYLIC | 4/5 | 5 | | |
| POLYESTER | 5 | 4/5 | | |
| POLYAMIDE | 5 | 4/5 | | |
| COTTON | 5 | 4/5 | | |
| ACETATE | 5 | 5 | | |

| **FIX: 165°C × 3 min - PRINTING MOD: B 4 steps - No Pretreatment** | | | | |
|---|---|---|---|---|
| | PERSPIRATION FASTNESS | | RUBBING FASTNESS | |
| MULTI FIBER WITNESS | ACID | BASIC | WET | DRY |
| WOOL | 5 | 5 | 5 | 5 |
| ACRYLIC | 5 | 5 | | |
| POLYESTER | 5 | 5 | | |
| POLYAMIDE | 5 | 5 | | |
| COTTON | 5 | 5 | | |
| ACETATE | 5 | 5 | | |

The results of perspiration and rubbing fastness were good in all conditions. Without pretreatment the perspiration fastness was surprisingly even better and there was no color transfer on the multifiber witness (the color penetrates more into the fabric).

## Claims

1. An ink set comprising at least a cyan ink, a magenta ink, a yellow ink and a black ink comprising disperse and/or solvent dyes in an aqueous vehicle, wherein said disperse and/or solvent dyes are selected from the group consisting of Disperse Yellow 64, Disperse Yellow 114, Solvent Orange 11, Solvent Violet 36, Solvent Violet 14, Solvent Red 169, Solvent Red 195, Disperse Blue 60, Disperse Blue 165, and mixtures thereof.

2. The ink set according to claim 1 wherein said cyan ink comprises disperse dyes in an aqueous vehicle, wherein said disperse dyes are selected from the group consisting of Disperse Blue 60, Disperse Blue 165, and mixture thereof.

3. The ink set according to claim 1 wherein said magenta ink comprises solvent dyes in an aqueous vehicle, wherein said solvent dyes are selected from the group consisting of Solvent Red 169, Solvent Red 195, and mixture thereof.

4. The ink set according to claim 1 wherein said yellow ink comprises disperse dyes in an aqueous vehicle, wherein said disperse dyes are selected from the group consisting of Disperse Yellow 64, Disperse Yellow 114, and mixture thereof.

5. The ink set according to claim 1 wherein said black ink comprises disperse and/or solvent dyes in an aqueous vehicle, wherein said disperse and/or solvent dyes are selected from the group consisting of Disperse Yellow 64, Disperse Yellow 114, Solvent Orange 11, Solvent Violet 36, Solvent Violet 14, Solvent Red 169, Solvent Red 195, Disperse Blue 60, Disperse Blue 165, and mixtures thereof.

6. The ink set according to claim 1 wherein said ink set comprises one or more additional inks selected from red ink, violet ink, orange ink and blue ink, each comprising at least one disperse and/or solvent dye in an aqueous vehicle, wherein said disperse and/or solvent dyes are selected from the group consisting of Disperse Yellow 64, Disperse Yellow 114, Solvent Orange 11, Solvent Violet 36, Solvent Violet 14, Solvent Red 169, Solvent Red 195, Disperse Blue 60, Disperse Blue 165, and mixtures thereof.

7. The ink set according to any one of claims 1 to 6, wherein said inks comprises from 80 to 99%, preferably from 90 to 98%, more preferably 93-97% by weight of aqueous vehicle and from 1 to 20%, preferably from 2 to 10%, more preferably from 3 to 7% by weight of said disperse and/or solvent dyes, or mixture thereof, based on the total weight of the ink.

8. The ink set according to any one of claims 1 to 6, wherein said aqueous vehicle comprises an organic solvent in an amount of from 5 to 70%, preferably from 10 to 50%, more preferably from 15 to 40%, still more preferably from the 20 to 35%, based on the total weight of the aqueous vehicle.

9. The ink set according to any one of claims 1 to 6, wherein said aqueous vehicle comprises a binder in an amount of from 2 to 30%, preferably from 4 to 20%, more preferably from 8 to 15% by weight, based on the total weight of the ink, and a crosslinking agent in an amount of from 1 to 10%, preferably from 2 to 8%, more preferably from 3 to 6% by weight, based on the total weight of the ink.

10. The ink set according to any one of claims 1 to 6, wherein said aqueous vehicle comprises a surfactant in an amount of from 0.01 to 10% by weight, preferably from 0.2 to 8% by weight, still more preferably between 0.2 and 5% by weight, based on the total weight of the ink.

11. The ink set according to any one of claims 1 to 6, wherein said aqueous vehicle comprises a dispersing polymer in an amount of less than 15% by weight, preferably in an amount ranging from 1 to 10%, more preferably from 1 to 6% by weight, based on the total weight of the ink.

12. A method for inkjet-printing on a fabric using an ink set according to any one of claims 1 to 11.

13. The method according to claim 12, said method comprising the following steps:
(a) providing an inkjet printer responsive to digital signals,
(b) loading the printer with a fabric to be printed,
(c) loading the printer with an ink set according to the first object of the invention,
(d) printing the fabric by using said ink set in response to a digital signal, and
(e) fixing the inks printed on the fabric by heat at a temperature of from 160°C to 170°C for a period of from 3 to 8 minutes, and
(f) optionally, washing the printed fabric.

14. The method according to any one of claims 12 and 13 wherein said fabric is polyester, polyamide, acrylic, acetate, and/or blend thereof with natural fibers, preferably wool and cotton.

15. The method according to any one of claims 12 to 14 wherein said fixing step (e) is made at about 165°-168°C for a period of from 4 to 7 minutes.

16. The method according to any one of claims 12 to 15 wherein said fabric is not pre-treated with pre-treatment solutions and said printed fabric is not wet post-treated with steam, water, or post-treatment solutions.
